**Europäisches Patentamt**

**European Patent Office**

**Office européen des brevets**

(19)

(11) Veröffentlichungsnummer : **0 355 564 B1**

(12) ## EUROPÄISCHE PATENTSCHRIFT

(45) Veröffentlichungstag der Patentschrift :
**03.06.92 Patentblatt 92/23**

(51) Int. Cl.$^5$ : **F16K 27/04, F16K 3/08**

(21) Anmeldenummer : **89114609.4**

(22) Anmeldetag : **08.08.89**

(54) **Absperr- und Regulierventil.**

(30) Priorität : **19.08.88 DE 3828178**

(43) Veröffentlichungstag der Anmeldung :
**28.02.90 Patentblatt 90/09**

(45) Bekanntmachung des Hinweises auf die
Patenterteilung :
**03.06.92 Patentblatt 92/23**

(84) Benannte Vertragsstaaten :
**AT BE CH DE ES FR GB GR IT LI NL SE**

(56) Entgegenhaltungen :
**DE-A- 3 107 431**
**FR-A- 2 219 350**
**US-A- 1 659 477**
**US-A- 3 372 709**

(73) Patentinhaber : **FRIEDRICH GROHE
AKTIENGESELLSCHAFT
Hauptstrasse 137
W-5870 Hemer (DE)**

(72) Erfinder : **Körfgen, Harald
Sümbergstrasse 49
W-5758 Fröndenberg (DE)**
Erfinder : **Wagner, Friedrich
Im Teninger Acker 11
W-7833 Endingen (DE)**
Erfinder : **Hirsch, Heinz
Batenhorstweg 5
W-4770 Soest (DE)**
Erfinder : **Grau, Walter
Bergstrasse 39
W-7638 Mahlberg (DE)**
Erfinder : **Grendel, Vinzenz
Friedensstrasse 5
W-5870 Hemer (DE)**

EP 0 355 564 B1

EP 0 355 564 B1

**Beschreibung**

Die Erfindung betrifft ein Absperr- und Regulierventil, insbesondere für Wasserarmaturen, mit den im Oberbegriff des Anspruchs 1 angegebenen Merkmalen.

Ein Ventil dieser Gattung ist aus der DE-A-31 07 431 bekannt. Hierbei ist das Ventil mit seinem Gehäuse so ausgelegt, daß es auch nachträglich bei bereits installierten Armaturen eingesetzt werden kann, die ursprünglich mit Normventiloberteilen mit axial verschiebbaren Verschlußteilen ausgestattet waren. Bei diesem vorbekannten Ventil liegt die Ventilsitzscheibe lediglich an einer äußeren Ringschulter des Gehäuses an, so daß eine relativ dicke Platte als Ventilsitzscheibe erforderlich ist. Trotzdem kann nicht ausgeschlossen werden, daß die Ventilsitzscheibe bei in der Wasserleitung auftretenden Druckstößen eine Durchbiegung erfährt, die zu Undichtigkeiten oder gar zu einem Bruch der Ventilsitzscheibe führen kann. Darüber hinaus ist die Feder für die Erzeugung der Mindestanpreßkraft für die Anpressung der Ventilregulierscheibe an die Ventilsitzscheibe ungünstig im Wasserströmungsbereich der Einlaßöffnung angeordnet.

Ferner ist aus der US-A-2 923 318 ein Absperr- und Regulierventil bekannt, welches in besonders ausgebildete Aufnahmebohrungen in Armaturen einsetzbar ist. Die Ventilsitzscheibe ist dabei von der stromabwärts gelegenen Stirnseite eingesetzt und mit einem koaxial angeordneten rohrförmigen Zapfen gestützt. Auch bei dieser Ausbildung kann eine Durchbiegung oder Verspannung der Ventilsitzscheibe nicht ausgeschlossen werden. Außerdem besteht das Ventil aus relativ vielen kompliziert bauenden Einzelteilen, wobei selbst das Gehäuse zweiteilig ausgebildet sein muß.

Der Erfindung liegt die Aufgabe zugrunde, das im Oberbegriff des Anspruchs 1 angegebene Absperr- und Regulierventil zu verbessern, wobei es mit zur Aufgabe gehört, das Ventil so auszubilden, daß es aus wenigen einfach herzustellenden Teilen kostengünstig zusammenfügbar ist und in die verschiedenen Armaturen relativ einfach und unproblematisch einsetzbar ist.

Diese Aufgabe wird erfindungsgemäß mit den im kennzeichnenden Teil des Anspruchs 1 angegebenen Merkmalen gelöst.

Weitere Ausgestaltungen der Erfindung sind in den Ansprüchen 2 bis 15 angegeben.

Die mit der Erfindung erzielbaren Vorteile bestehen insbesondere darin, daß eine optimale Aufnahme und Stützung der Ventilsitzscheibe mit dem Gehäuse ermöglicht wird und die Feder für die Anpressung der Ventilregulierscheibe an die Ventilsitzscheibe aus dem Strömungsweg herausgenommen werden kann. Außerdem ermöglicht das erfindungsgemäße Ventil eine einfache und sichere Anordnung der Dichtungen zwischen Ventilgehäuse und der Ventilsitzscheibe sowie der Armatur. Alle beweglichen Metallteile sind nicht vom Fluid bzw. Wasser umspült, so daß Ablagerungen und Korrosionen an den beweglichen Teilen vermieden werden können.

Ausführungsbeispiele der Erfindung sind in der Zeichnung dargestellt und werden im folgenden näher beschrieben. Es zeigt

Figur 1 ein Absperr- und Regulierventil im Längsschnitt in der Ebene I der Figur 2;

Figur 2 das Absperr- und Regulierventil gemäß Figur 1 in der Schnittebene II;

Figur 3 ein anderes Absperr- und Regulierventil im Längsschnitt, eingebaut in einer teilweise dargestellten Armatur;

Figur 4 das Absperr- und Regulierventil gemäß Figur 3 in der Schnittebene IV.

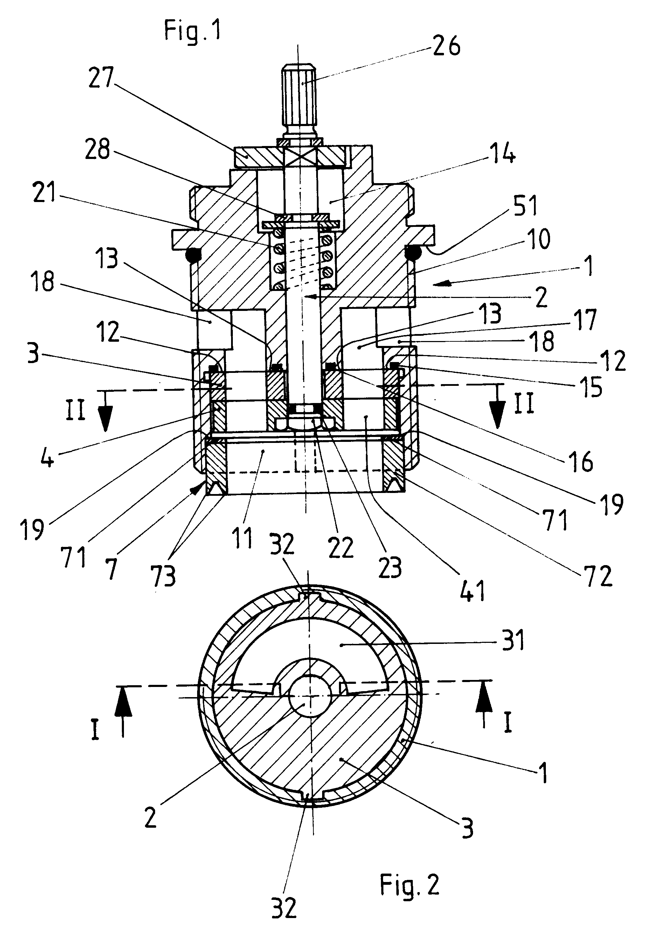

Der Einfachheit halber sind bei den Ausführungsbeispielen in der Zeichnung gleiche oder entsprechende Elemente mit jeweils gleichen Bezugszeichen versehen. Das in den Figuren 1 und 2 gezeigte Absperr- und Regulierventil besteht im wesentlichen aus einem etwa zylindrischen Gehäuse 1, welches mit Gewinde 10 in einer in der Zeichnung nicht dargestellten Armatur einschraubbar ist. Das Gehäuse 1 weist dabei eine koaxial zum Gehäuse 1 ausgebildete Einlaßöffnung 11 und radial angeordete Auslaßöffnungen 18 auf. Von der stromaufwärts gelegenen Stirnseite aus sind durch die Einlaßöffnung 11 eine Ventilsitzscheibe 3 und eine Ventilregulierscheibe 4 in das Gehäuse 1 einbringbar. Im Grund der Einlaßöffnung 11 ist eine äußere Tragschulter 12 und eine innere Tragschulter 13 ausgebildet, in deren Bereich ebenfalls koaxial zum Gehäuse 1 angeordnete Dichtringe 15,16 zur Abdichtung der Ventilsitzscheibe 3 in dem Gehäuse 1 vorgesehen sind. Die Ventilsitzscheibe 3 wird somit im inneren und äußeren Bereich relativ großflächig aufgenommen, abgestützt und gedichtet. In der Stecklage ist außerdem die Ventilsitzscheibe 3 mit Hilfe von einem oder mehreren Zähnen 32 drehfest aber axial verschiebbar im Gehäuse 1 gehaltert. Stromabwärts hinter der Ventilsitzscheibe 3, von der inneren und äußeren Tragschulter begrenzt, ist ein Ringraum 17 ausgebildet, der mit radial in der Wandung des Gehäuses 1 ausgebildeten Auslaßöffnungen 18 in Verbindung steht. Koaxial in dem Gehäuse 1 ist in einer Bohrung eine Ventilspindel 2 drehbar gelagert. An dem stromaufwärts gelegenen Ende ist ein Kopfteil 22 ausgebildet, mit dem die Ventilregulierscheibe 4 drehfest und axial in Richtung auf die Ventilsitzscheibe 3 festliegend verbindbar ist. Am stromabwärts gelegenen Bereich der Ventilspindel 2 ist eine Feder 21 in einer Einsenkung 14 des Gehäuses 1 außerhalb des vom Fluid beaufschlagten Raums angeordnet. Die Ventilspindel 2 steht aus dem Gehäuse 1 mit einem Zapfen 26 axial vor, so daß in diesem Bereich eine Anschlagscheibe 27 zur Dreh-

2

EP 0 355 564 B1

begrenzung der Ventilspindel 2 und ein in der Zeichnung nicht dargestellter Betätigungsgriff angeordnet werden können. Die Ventilspindel 2 ist dabei so bemessen, daß sie durch eine zentrale Durchtrittsöffnung der Ventilsitzscheibe 3 und der Aufnahmeöffnung der Ventilregulierscheibe 4 hindurchführ- und mit dem Kopfteil 22 in der Aufnahmeöffnung axial anliegend und drehfest halterbar ist, wobei die Abdichtung zwischen Ventilregulierscheibe 4 und Ventilspindel 2 mit einem Dichtring 23 bewirkt wird. Die Abdichtung des Gehäuses 1 mit einem in der Zeichnung nicht dargestellten Zuflußkanal einer Armatur erfolgt mit Hilfe eines Dichtelements 7, welches stromaufwärts in einem erweiterten Bereich der Einlaßöffnung 11 des Gehäuses 1 einsetzbar ist. Das Dichtelement besteht aus einem Stützring 71, der an einer Ringschulter 19 des Gehäuses 1 in seiner Stecklage zur Anlage gelangt. An der stromaufwärts gelegenen Stirnseite des Stützrings 71 ist ein Dichtring 72 aus Gummi anvulkanisiert. Der Dichtring 72 hat an der stromaufwärts gelegenen Stirnseite zwei konzentrisch angeordnete, im Querschnitt einen V-förmigen Freiraum umkreisende Dichtlippen 73.

Die Montage des Absperr- und Regulierventils kann in folgender Weise erfolgen:

Zunächst können die Ventilsitzscheibe 3 und die Ventilregulierscheibe 4 durch das Hindurchführen der Ventilspindel 2 zusammengefügt werden, wobei dann die Ventilregulierscheibe 4 drehfest und axial in Richtung auf die Ventilsitzscheibe 3 festliegend mit Hilfe des Kopfteils 22 sowie gedichtet mit dem Dichtring 23 gehaltert ist. Nunmehr können die beiden Dichtringe 15 und 16 im Bereich der inneren und äußeren Tragschulter 12,13 in das Gehäuse 1 eingelegt werden. Hiernach sollte dann die aus der Ventilsitzscheibe 3, der Ventilregulierscheibe 4 und der Ventilspindel 2 bestehende Baueinheit von der Einlaßöffnung 11 in das Gehäuse 1 eingeführt werden. Nach dem Anliegen der Ventilsitzscheibe 3 an der inneren und äußeren Tragschulter 12,13 kann dann von der stromabwärts gelegenen Stirnseite aus die Feder 21 in die Einsenkung 14 eingebracht und mit Hilfe eines an der Ventilspindel 2 verrastbaren Sprengring 28 zwischen Gehäuse 1 und Ventilspindel 2 verspannt werden, so daß nunmehr die Ventilsitzscheibe 3 und die Ventilregulierscheibe 4 mit der entsprechenden Vorspannung im Gehäuse 1 gehaltert sind.

Danach kann das Dichtelement 7 in die Einlaßöffnung 11 bis zum Anschlag an die Ringschulter 19 eingeschoben werden. An der gegenüberliegenden Stirnseite im Bereich des Zapfens 26 kann die Anschlagscheibe 27 drehfest auf die Ventilspindel 2 aufgesteckt und mit einem Sprengring gesichert werden. Die Anschlagscheibe 27 wirkt nunmehr mit einem am Ventilgehäuse 1 ausgebildeten Anschlag zusammen, so daß die Drehbewegung der Ventilspindel 2 begrenzt ist.

Hiernach kann das Absperr- und Regulierventil in den Körper einer Armatur eingesetzt werden. Das Gehäuse 1 des Absperr- und Regulierventils wird dabei mit einem Gewinde 10 in den Körper der Armatur bis zur Anlage des Bunds 51 eingeschraubt. In dieser Lage ist die Einlaßöffnung 11 mit dem in der Zeichnung nicht dargestellten Zuströmkanal der Armatur verbunden. Die dichte Verbindung erfolgt dabei mit dem Dichtelement, das einerseits mit den Dichtlippen 73 an dem als Ventilsitz ausgebildeten Endbereich des Zuströmkanals zur dichten Anlage gelangt und andererseits durch die axiale Verpressung an der Wandung des Gehäuses 1 zur Abdichtung gelangt. Die Abdichtung des Dichtrings 72 an der Wandung des Gehäuses 1 wird außerdem durch den anstehenden Wasserdruck unterstützt.

Wird nun mit der Ventilspindel 2 die Ventilregulierscheibe 4 in eine Drehstellung gebracht, in der sich die Durchtrittsöffnung 41 mit der Durchtrittsöffnung 31 der Ventilsitzscheibe 3 mehr oder weniger in Deckung befindet, so kann das Fluid von der Einlaßöffnung 11 in den Ringraum 17 gelangen und wird von hier über die Auslaßöffnungen 18 in den Auslaßbereich der in der Zeichnung nicht dargestellten Armatur abgegeben.

Bei dem dargestellten Ausführungsbeispiel ist gegenüber der Ventilsitzscheibe 3 und der Ventilregulierscheibe 4 jeweils eine Durchtrittsöffnung 31,41 ausgebildet. Selbstverständlich können auch mehrere Durchtrittsöffnungen auf den beiden Ventilscheiben angeordnet werden. Die Anordnung einer Durchtrittsöffnung auf einem Bodenbereich von etwas 180° hat jedoch den Vorteil, daß der Stellwinkel des Ventils von der Geschlossenstellung bis zur voll geöffneten Stellung etwa 180° beträgt.

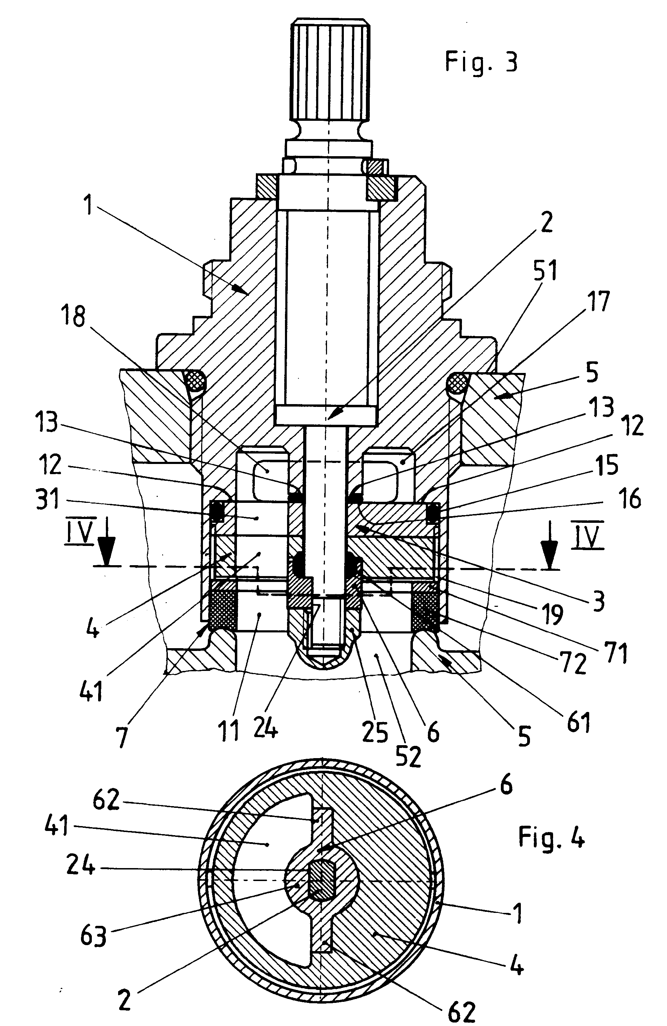

Das in den Figuren 3 und 4 dargestellte Ausführungsbeispiel unterscheidet sich zu dem vorstehend beschriebenen Ausführungsbeispiel im wesentlichen nur durch die Ausbildung der Ventilspindel 2 und der Zuordnung zur Ventilregulierscheibe 4.

Anstatt einer schraubenförmigen Feder 21 ist zwischen der Ventilspindel 2 und der Ventilregulierscheibe 4 ein axial zusammendrückbarer Ring 61 aus Gummi vorgesehen, wobei außerdem zwischen Ventilspindel 2 und Ventilregulierscheibe 4 ein Mitnehmer 6 angeordnet ist.

Der Mitnehmer 6 ist mit einer Nabe 63 mit Hilfe einer Mitnehmerfläche 24 axial verschiebbar aber drehfest mit der Ventilspindel 2 verbunden. Der Mitnehmer 6 weist darüber hinaus zwei radial gegenüberliegende Arme 62 auf, die in entsprechende Ausnehmungen in der Ventilregulierscheibe 4 einfassen, so daß eine drehfeste Verbindung zwischen Ventilspindel 2 und der Ventilregulierscheibe 4 besteht. Koaxial zur Ventilspindel 2 ist zwischen der Ventilregulierscheibe 4 und dem Mitnehmer 6 der Ring 61 aus Gummi zwischengelagert und der Mitnehmer 6 mit Hilfe einer Hutmutter 25 axial auf der Ventilspindel 2 gesichert. Durch ein entsprechendes Aufschrauben der Hutmutter 25 auf die Ventilspindel 2 wird somit die Ventilregulierscheibe 4 mit Hilfe des Ringes

3

EP 0 355 564 B1

61 gegen die Ventilsitzscheibe 3 gepreßt. Der Ring 61 bewirkt somit einerseits die Mindestanpressung der Ventilregulierscheibe 4 an die Ventilsitzscheibe 3 und andererseits die Abdichtung der Durchtrittsöffnung für die Ventilspindel 2 in der Ventilregulierscheibe 4. Im Bereich seiner Stirnflächen ist der Ring 61 kegelstumpfförmig ausgebildet und wird von entsprechend geformten Einsenkungen an der Ventilregulierscheibe 4 und dem Mitnehmer 6 zur sicheren Lage aufgenommen.

Der Einbau in den Körper einer Armatur 5 mit einem Zuströmkanal 52 erfolgt in gleicher Weise wie bei dem Ausführungsbeispiel gemäß Figur 1 und 2.

Neben den gezeigten Federelementen in Form einer Schraubenfeder oder eines aus Gummi gebildeten elastischen Rings können auch Federscheiben oder anders ausgebildete Federelemente eingesetzt werden.


**Patentansprüche**

1. Absperr- und Regulierventil, insbesondere für Wasserarmaturen, mit einem wenigstens eine axiale Einlaß- und eine radiale Auslaßöffnung (11,18) aufweisenden, in Armaturen einsetzbaren Gehäuse (1), in dem quer zu dessen Längsachse eine mit wenigstens einer Durchtrittsöffnung (31) versehene Ventilsitzscheibe (3) unverdrehbar gehaltert ist und an der eine mit einer im Gehäuse (1) gelagerten Ventilspindel (2) verdrehbare Ventilregulierscheibe (4) an der stromaufwärts gelegenen Seite anliegt, wobei

– die Ventilregulierscheibe (4) mit einem Federelement gegen die Ventilsitzscheibe (3) gestrammt ist;

– beide Ventilscheiben (3,4) von einer stromaufwärts gelegenen Einlaßöffnung (11) in das Gehäuse (1) einsetzbar sind;

– zwischen dem Zuströmkanal (52) der Armatur (5) und dem Gehäuse (1) ein Dichtelement (7) vorgesehen ist und

– das Gehäuse (1) im Grund der Einlaßöffnung (11) eine äußere Tragschulter (12) im Bereich der Gehäusewandung aufweist,

dadurch gekennzeichnet, daß das Gehäuse (1) im Grund der Einlaßöffnung (11) neben der äußeren Tragschulter (12) im Bereich der Gehäusewandung wenigstens noch eine innere Tragschulter (13) im Bereich der Durchtrittsöffnung der Ventilspindel (2) aufweist und das Federelement einerseits an der Ventilspindel (2) und andererseits an der Ventilregulierscheibe (4) oder dem Gehäuse (1) abgestützt ist.

2. Absperr- und Regulierventil nach Anspruch 1, dadurch gekennzeichnet, daß als Federelement eine Feder (21) außerhalb des vom Fluid beaufschlagten Raums angeordnet ist.

3. Absperr- und Regulierventil nach Anspruch 1 oder 2, dadurch gekennzeichnet, daß die Ventilspindel (2) mit einem Kopfteil (22) formschlüssig in Richtung der axialen Federspannkraft und der Drehung mit der Ventilregulierscheibe (4) verbindbar ist.

4. Absperr- und Regulierventil nach Anspruch 3, dadurch gekennzeichnet, daß der Kopfteil (22) ein Mehrkantprofil, z.B. Sechskant, aufweist und in einer entsprechenden Öffnung in der Ventilregulierscheibe (4) aufgenommen ist, wobei hinter dem Kopfteil (22) ein Dichtring (23) zur Abdichtung der Öffnung in der Ventilregulierscheibe (4) vorgesehen ist, und die Feder (21) als Schraubenfeder hinter den Dichtungen, die den vom Fluid beaufschlagten Raum abgrenzen, im Gehäuse (1) in einer Einsenkung (14) angeordnet ist.

5. Absperr- und Regulierventil nach wenigstens einem der Ansprüche 1 bis 4, dadurch gekennzeichnet, daß an dem stromaufwärtigen Ende der Ventilspindel (2) ein Mitnehmer (6) angeordnet ist, mit dem eine formschlüssige Verbindung zwischen der Ventilspindel (2) und der Ventilregulierscheibe (4) herstellbar ist.

6. Absperr- und Regulierventil nach wenigstens einem der Ansprüche 1 bis 5, dadurch gekennzeichnet, daß als Federelement ein axial zusammendrückbarer Ring (61) aus einem Elastomer, z.B. Gummi, vorgesehen ist.

7. Absperr- und Regulierventil nach wenigstens einem der Ansprüche 1 bis 6, dadurch gekennzeichnet, daß als Federelement ein elastischer Ring (61) zwischen dem Mitnehmer (6) und der Ventilregulierscheibe (4) angeordnet ist.

8. Absperr- und Regulierventil nach Anspruch 6 oder 7, dadurch gekennzeichnet, daß der Ring (61) in Richtung auf seine Stirnflächen verjüngt, z.B. kegelstumpfförmig, ausgebildet ist.

9. Absperr- und Regulierventil nach wenigstens einem der Ansprüche 1 bis 8, dadurch gekennzeichnet, daß im Bereich der inneren und äußeren Tragschultern (12,13) je ein etwa konzentrisch zur Ventilspindel (2) angeordneter Dichtring (15,16) zur Abdichtung zwischen der Ventilsitzscheibe (3) und dem Gehäuse (1) vorgesehen ist.

10. Absperr- und Regulierventil nach wenigstens einem der Ansprüche 1 bis 9, dadurch gekennzeichnet, daß stromabwärts hinter der Ventilsitzscheibe (3) ein von der inneren und der äußeren Tragschulter (12,13) begrenzter Ringraum (17) in dem Gehäuse (1) ausgebildet ist, der einerseits mit einem oder mehreren radialen Auslaßöffnungen (18) und andererseits mit einer oder mehreren Durchtrittsöffnungen (31) in der Ventilsitzscheibe (3) in Verbindung steht.

11. Absperr- und Regulierventil nach wenigstens einem der Ansprüche 5 bis 10, dadurch gekennzeichnet, daß an dem stromaufwärts gelegenen Endbereich der Ventilspindel (2) wenigstens eine Mitnehmerfläche (24) ausgebildet ist, auf der der Mitnehmer (6) axial begrenzt verschiebbar aber drehfest gehalten ist, wobei zur Halterung und Erzeugung einer Vorspannung der Feder eine mittels Gewinde aufschraubbare Mutter, insbesondere Hutmutter (25), vorgesehen ist.

12. Absperr- und Regulierventil nach Anspruch 11, dadurch gekennzeichnet, daß der Mitnehmer zwei radial gegenüberliegende Arme (62) hat, die in eine entsprechende Ausnehmung in der Ventilregulierscheibe (4) einfassen, wobei die Nabe (63) des Mitnehmers (6) etwa einen Außendurchmesser aufweist, der etwa dem Durchmesser der inneren Tragschulter (13) entspricht, so daß die Ausnehmung in der Ventilregulierscheibe (4) radial an der einen Seite von der als Halbkreisring ausgebildeten Durchtrittsöffnung (41) offen ist.

13. Absperr- und Regulierventil nach wenigstens einem der Ansprüche 1 bis 12, dadurch gekennzeichnet, daß das Dichtelement (7) zwischen Armatur (5) und Gehäuse (1) von einem in einen erweiterten, stromaufwärts gelegenen Bereich der Einlaßöffnung (11) einführbaren Stützring (71) und einem an der stromaufwärts gelegenen Stirnseite des Stützrings (71) gelagerten, von einem Elastomer gebildeten Dichtring (72) besteht, derart, daß nach dem Einsatz des Ventils in eine Armatur (5) der Stützring (71) von einer Ringschulter (19) in dem Gehäuse (1) axial abgestützt und der Dichtring (72) radial an die Wandung der Einlaßöffnung (11) zur Dichtung gepreßt ist, wobei die Ventilregulierscheibe (4) axial hinreichend Spiel zum Dichtelement (7) aufweist.

14. Absperr- und Regulierventil nach Anspruch 13, dadurch gekennzeichnet, daß der Dichtring (72) auf den Stützring (71) aufvulkanisiert ist und im Durchmesser so bemessen ist, daß er in der Stecklage im Gehäuse (1) durch Reibschluß gehaltert und ein unbeabsichtigtes Herausfallen ausgeschlossen ist.

15. Absperr- und Regulierventil nach Anspruch 13 oder 14, dadurch gekennzeichnet, daß der Dichtring (72) an der stromaufwärts gelegenen Stirnseite wenigstens eine Dichtlippe, vorzugsweise zwei konzentrisch angeordnete, im Querschnitt einen V-förmigen Freiraum umkreisende Dichtlippen (73) trägt.


## Revendications

1. Soupape d'arrêt et de régulation, en particulier pour tuyauteries d'eau avec un boîtier (1) pouvant être monté dans des tuyauteries, présentant au moins un orifice d'admission axial et un orifice d'évacuation radial (11, 18), boîtier dans lequel on appuie perpendiculairement à son axe longitudinal une bague de siège de soupape (3) pourvue d'au moins un orifice de passage (31), de façon qu'elle ne puisse pas tourner et cette bague repose, du côté situé en amont, sur une rondelle de réglage de soupape (4), pouvant tourner avec une tige de soupape (2) montée dans le boîtier (1), soupape dans laquelle :
   – la rondelle de réglage de la soupape (4) est serrée fortement par un élément à ressort contre la bague de siège de la soupape (3),
   – la bague de siège et la rondelle de réglage de la soupape (3, 4) peuvent être montées par un orifice d'admission (11) situé du côté amont dans le boîtier (11),
   – entre la canalisation d'alimentation (52) de la tuyauterie (5) et le boîtier (1) il est prévu un élément d'étanchéité (7),
   – le boîtier (1), présente au fond de l'orifice d'admission (11) un épaulement extérieur de support (12) dans la zone de la paroi du boîtier,
soupape d'arrêt et de régulation caractérisée en ce que le boîtier (1) présente au fond de l'orifice d'admission (11) en plus de l'épaulement extérieur de support (12) dans la zone de la paroi du boîtier au moins encore un épaulement intérieur de support (13) dans la zone de l'ouverture de passage de la tige de la soupape (2) et l'élément à ressort s'appuie d'une part sur la tige de la soupape (2) et d'autre part sur la rondelle de réglage de la soupape (4) ou sur le boîtier (1).

2. Soupape d'arrêt et de régulation selon la revendication 1, caractérisée en ce que, comme élément de ressort on dispose un ressort (21) en dehors de l'espace concerné par le fluide.

3. Soupape d'arrêt et de régulation selon la revendication 1 ou 2, caractérisée en ce que la tige de soupape (2) peut être reliée par une partie de tête (22), par interpénétration par la forme, dans le sens de la force axiale de tension du ressort et de la rotation à la rondelle de réglage de la soupape (4).

4. Soupape d'arrêt et de régulation selon la revendication 3, caractérisée en ce que la partie de tête (22) présente un profil polygonal, par exemple un hexagone, et est reçue dans une ouverture correspondante dans la rondelle de réglage de la soupape (4), tandis qu'en arrière de la partie de tête (22) il est prévu une bague d'étanchéité (23) pour rendre étanche l'orifice dans la rondelle de réglage de la soupape (4) et le ressort (21) est disposé comme ressort spiral en arrière des joints d'étanchéité, qui délimitent l'espace concerné par le fluide, dans le boîtier (1) dans un enfoncement (14).

5. Soupape d'arrêt et de régulation selon au moins l'une des revendications 1 à 4, caractérisée en ce qu'on dispose un entraîneur (6) sur l'extrémité située du côté amont de la tige de la soupape (2), entraîneur avec lequel peut être établie une liaison par interpénétration par la forme entre la tige de la soupape (2) et la rondelle de réglage de la soupape (4).

6. Soupape d'arrêt et de régulation selon au moins l'une des revendications 1 à 5, caractérisée en ce qu'on prévoit comme élément de ressort une bague (61), pouvant être axialement comprimée, en un élastomère, par exemple en caoutchouc.

7. Soupape d'arrêt et de régulation selon au moins l'une de revendications 1 à 6, caractérisée en ce que l'on dispose comme élément de ressort une bague élastique (61) entre l'entraîneur (6) et la rondelle de réglage de la soupape (4).

8. Soupape d'arrêt et de régulation selon la revendication 6 ou 7, caractérisée en ce que la bague (61) se rétréci dans la direction de ses faces frontales, par exemple de forme tronconique.

9. Soupape d'arrêt et de régulation selon au moins l'une des revendications 1 à 8, caractérisée en ce que dans la zone des épaulements intérieur et extérieur de support (12, 13) il est prévu chaque fois une bague d'étanchéité (15, 16) disposé à peu près concentriquement à la tige de la soupape (2) pour assurer l'étanchéité entre la bague de siège de la soupape (3) et le boîtier (1).

10. Soupape d'arrêt et de réglage selon au moins l'une des revendications 1 à 9, caractérisée en ce que du côté aval en arrière de la bague de siège de la soupape (3) on forme un espace annulaire (17) dans le boîtier (1) délimité par l'épaulement intérieur et extérieur (12, 13) de support, qui est en liaison d'une part avec un ou plusieurs orifices d'admission radiaux (18) et d'autre part avec un ou plusieurs orifices de passage (31) dans la bague de siège de la soupape (3).

11. Soupape d'arrêt et de régulation selon au moins l'une des revendications 5 à 10, caractérisée en ce que sur la zone terminale située du côté amont de la tige de soupape (2) on forme au moins une surface d'entraînement (24), sur laquelle l'entraîneur (3) limité axialement est maintenu de façon à pouvoir coulisser mais sans pouvoir tourner, un écrou, en particulier un écrou borgne (25) pouvant être vissé au moyen d'un filetage , étant prévu pour la fixation et la mise sous tension.

12. Soupape d'arrêt et de régulation selon la revendication 11, caractérisée en ce que l'entraîneur a deux bras, se faisant radialement vis-à-vis (62), qui s'emboîtent dans un évidement correspondant dans la rondelle de réglage de la soupape (4), le moyeu (63) de l'entraîneur (6) présentant à peu près un diamètre externe, qui correspond à peu près au diamètre de l'épaulement intérieur de support (13), de telle sorte que l'évidement dans la rondelle de réglage de la soupape (4) est ouvert sur l'un des côtés de l'orifice de passage (41) formé comme une bague semi-circulaire.

13. Soupape d'arrêt et de régulation selon au moins l'une des revendications 1 à 12, caractérisée en ce que l'élément d'étanchéité (7) entre la tuyauterie (5) et le boîtier (1) se compose d'une bague de soutien (71) qu'on peut introduire dans une zone élargie de l'ouverture d'admission (11) située du côté amont, et d'une bague d'étanchéité (72) réalisée en élastomère montée sur la face frontale de la bague d'appui (71) située du côté amont, de telle sorte qu'après le montage de la soupape dans une tuyauterie (5) la bague de soutien (71) est supportée axialement par un épaulement annulaire (19) dans le boîtier (1) et la bague d'étanchéité (72) est comprimée radialement sur la paroi de l'orifice d'admission (11) pour assurer l'étanchéité, la rondelle de réglage de la soupape (4) présentant axialement suffisamment de jeu pour l'élément d'étanchéité (7).

14. Soupape d'arrêt et de régulation selon la revendication 13, caractérisée en ce que la bague d'étanchéité (72) est rapportée par vulcanisation sur la bague de soutien (71) et a un diamètre d'une dimension telle qu'elle est serrée par friction dans l'emboîtement dans le boîtier (1) et qu'une extraction imprévue est exclue.

15. Soupape d'arrêt et de régulation selon la revendication 13 ou 14, caractérisée en ce que la bague d'étanchéité (72) porte sur la face frontale située du côté amont au moins une lèvre d'étanchéité, de préférence deux lèvres d'étanchéité (73) disposées concentriquement, entourant un espace libre ayant en section transversale la forme d'un V.

## Claims

1. A shut-off and regulating valve, especially for water fittings, with a housing (1) which has at least one axial inlet opening and a radial outlet opening (11,18) and which can be installed in fittings, and in which a valve seat disc (3) is non-rotatably retained, transversely to the longitudinal axis of the housing, the valve seat disc (3) being provided with at least one passage opening (31) and a valve regulating disc (4) rotatable with a valve spindle (2) mounted in the housing (1) bearing on the upstream side of the valve seat disc (3), wherein
   – the valve regulating disc (4) is pulled tight against  the valve seat disc (3) by a spring element;
   – both valve discs (3,4) can be inserted into the  housing (1) from the inlet opening (11) located  upstream;

– a sealing element (7) is provided between the infeed channel (52) of the fitting (5) and the housing (1), and

– the housing (1) has in the bottom of the inlet opening (11) an outer support shoulder (12) in the region of the housing wall,

characterised in that the housing (1) also has in the bottom of the inlet opening (11) additionally to the outer support shoulder (12) in the region of the housing wall at least one inner support shoulder (13) in the region of the passage opening of the valve spindle (2), and the spring element is supported on the one hand on the valve spindle (2) and on the other hand on the valve regulating disc (4) or the housing (1).

2. A shut-off and regulating valve according to Claim 1, characterised in that the spring element is provided by a spring (21) which is located outside the space to which fluid is supplied.

3. A shut-off and regulating valve according to Claim 1 or 2, characterised in that the valve spindle (2) can be positively connected to a head member (22) effective in the direction of the axial spring bias force and rotation with the valve regulating disc (4).

4. A shut-off and regulating valve according to Claim 3, characterised in that the head member (22) has a multi-sided profile, for example a hexagonal profile, and is accommodated in a corresponding opening in the valve regulating disc (4), a sealing ring (23) being provided behind the head member (22) to seal off the opening in the valve regulating disc (4), and the spring (21) is arranged as a helical spring, in a depression (14) in the housing (1), behind the seals which bound the space to which fluid is supplied.

5. A shut-off and regulating valve according to at least one of Claims 1 to 4, characterised in that at the upstream end of the valve spindle (2) a driver member (6) is arranged by which a positive connection can be produced between the valve spindle (2) and the valve regulating disc (4).

6. A shut-off and regulating valve according to at least one of Claims 1 to 5, characterised in that as the spring element an axially compressible ring (61) made of an elastomer, for example rubber, is provided.

7. A shut-off and regulating valve according to at least one of Claims 1 to 6, characterised in that as the spring element a resilient ring (61) is arranged between the driver member (6) and the valve regulating disc (4).

8. A shut-off and regulating valve according to Claim 6 or 7, characterised in that the ring (61) tapers in the direction of its end faces, for example is frustoconical in shape.

9. A shut-off and regulating valve according to at least one of Claims 1 to 8, characterised in that in the region of the inner and outer support shoulders (12,13), respectively, a sealing ring (15,16) arranged to be approximately concentric with the valve spindle (2) is provided for sealing between the valve seat disc (3) and the housing (1).

10. A shut-off and regulating valve according to at least one of Claims 1 to 9, characterised in that downstream behind the valve seat disc (3) there is formed in the housing (1) an annular space (17) which is bounded by the inner and outer support shoulders (12, 13) and which communicates on the one hand with one or more radial outlet openings (18) and on the other hand with one or more passage openings (31) in the valve seat disc (3).

11. A shut-off and regulating valve according to at least one of Claims 5 to 10, characterised in that in the upstream end region of the valve spindle (2) at least one driver surface (24) is formed on which the driver member (6) is retained so that it is movable axially to a limited extent but is fixedly secured with respect to rotation, a nut that can be screwed up by means of a thread, especially a cap nut (25), being provided for retention and to produce a pre-tensioning of the spring.

12. A shut-off and regulating valve according to Claim 11, characterised in that the driver member has two radially opposed arms (62) which engage in a corresponding recess in the valve regulating disc (4), the hub (63) of the driver member (6) having an outside diameter which corresponds approximately to the diameter of the inner support shoulder (13), so that the recess in the valve regulating disc (4) is open radially on one side of the passage opening (41) which is in the shape of a semi-circle.

13. A shut-off and regulating valve according to at least one of Claims 1 to 12, characterised in that the sealing element (7) between the fitting (5) and the housing (1) consists of a support ring (71) that can be introduced into a widened region, located upstream, of the inlet opening (11), and a sealing ring (72), formed of an elastomer, and mounted on the end face, located upstream, of the support ring (71), that are such that after the valve has been inserted into a fitting (5), the support ring (71) is supported axially by an annular shoulder (19) in the housing (1), and the sealing ring (72) is pressed radially against the wall of the inlet opening (11) for sealing, the valve regulating disc (4) having sufficient axial play with respect to the sealing element (7).

14. A shut-off and regulating valve according to Claim 13, characterised in that the sealing ring (72) is vulcanised onto the support ring (71) and is of such a diameter that it is retained in the insertion position in the housing (1) by friction, and is prevented from falling out accidentally.

15. A shut-off and regulating valve according to Claim 13 or 14, characterised in that the sealing ring (72) carries on the upstream end face at least one sealing lip, preferably two concentrically arranged sealing lips (73) encircling a free space that is V-shaped in cross-section.

Fig.1

Fig. 2

Fig. 3

Fig. 4